# EUROPEAN PATENT SPECIFICATION

(11) **EP 0 640 754 B1**
(45) Date of publication and mention of the grant of the patent: **07.01.1998**
(21) Application number: 94113406.6
(22) Date of filing: 26.08.1994
(51) Int. Cl.: F02B 31/06, F02F 1/42

(54) **Internal combustion engine**
Brennkraftmaschine
Moteur à combustion interne

(30) Priority: 27.08.1993 JP 234340/93
(43) Date of publication of application: 01.03.1995
(73) Proprietor: YAMAHA HATSUDOKI KABUSHIKI KAISHA, Iwata-shi Shizuoka-ken, 438 (JP)
(72) Inventor: Nishigaki, Masato, Shizuoka-ken 438 (JP); Hara, Takashi, Shizuoka-ken 438 (JP)
(74) Representative: Grünecker, Kinkeldey, Stockmair & Schwanhäusser Anwaltssozietät

(56) References cited:
- EP-A- 0 390 589
- EP-A- 0 420 139
- EP-A- 0 433 728
- DE-A- 4 108 469
- DE-A- 4 233 640
- GB-A- 2 159 212
- US-A- 2 768 618
- US-A- 4 285 310
- US-A- 4 624 222
- US-A- 4 627 400
- US-A- 5 119 784
- SAE TECHNICAL PAPER SERIES ,PAPER 910477, 1 March 1991, WARRENDALE US pages 1 - 12 OMORI ET ALL 'Effect of intake port flow pattern on the in-cylinder tumbling air flow in multi-valve SI engines'
- MITSUBISHI MOTORS TECHNICAL REVIEW, no.3, 31 December 1991, TOKYO JP pages 28 - 40, XP000406532 ANDO ET ALL 'characteristics of turbulence generated by tumble and its effect on combustion'
- SAE TECHNICAL PAPER SERIES PAPER 920678, 28 February 1992, WARRENDALE US pages 129 - 141 'Concept of lean combustion by barrel-stratification'
- SAE TECHNICAL PAPER SERIES PAPER 900059, 2 February 1990, WARRENDALE US pages 1 - 21 KHALIGHI 'Intake-generated swirl and tumble motions in a 4-valve engine with various intake configurations-flow visualization and particle tracking velocimetry'
- PATENT ABSTRACTS OF JAPAN vol. 7, no. 230 (M-249) (1375) 12 October 1983 & JP-A-58 124 019 (TOYOTA) 23 July 1983

## Description

The present invention concerns an internal combustion engine comprising at least one cylinder with a combustion chamber defined therein, at least three intake valves including at least one centre intake valve and two side intake valves and intake passages associated therewith for delivering an intake charge to said combustion chamber wherein the intake passage associated with the centre intake valve has on its upper end side a flattened surface having a substantially straight slope for directing the flow of the intake charge downwards towards the central axis of the cylinder.

In the prior art, the air intake device for engines having three air intake valves per cylinder were configured, for example, as disclosed in Japan Patent Application Sho 63-256000 (1988). This air intake device of the prior art featured air intake valves aligned within a concentric circle with respect to the cylinder bore and these were operated by a common camshaft. Because of this arrangement, the side air intake valves, with respect to the center, exhibited a relatively large angle of slope between the axial center line of the center intake valve and the cylinder bore axis.

In addition, the air intake passages were directed to the vicinity of the combustion chamber and formed so that they could be opened and closed by the air intake valves. The passages were curved so that they led to the side of the cylinder head from the area of the combustion chamber. The two side air intake passages are formed at a relatively large angle with respect to cylinder bores when viewed in the axial camshaft direction. In other words, compared with the central air intake passage, the two side air intake passages had a greater angle of slope with respect to the cylinder bore when viewed in the axial camshaft direction. Also, the inside diameter of the three air intake passages was roughly equivalent.

With the above-configured air intake device of the prior art, when intake air is sucked into the combustion chamber from the three air intake passages, a vertical swirl is created inside the cylinder around a line that is parallel to the axis of the camshaft, so that fuel being supplied with the air is roughly uniformly distributed throughout the cylinder for efficient ignition. This type swirling flow will be called "tumble" below.

The reason why this tumbling action is generated within the cylinder is that there is a large angle of slope of each of the air intake passages with respect to the air intake valves. To wit, the inertia of the air flowing through the air intake passages causes it to strike the valve body of the air intake valve upon entering the combustion chamber and this changes the direction of flow at the side of the valve opposite from the cylinder axis, in other words toward the exhaust valve side. Because of this, the intake air flows from the entrance into the combustion chamber toward the exhaust valve side, descending along the walls of the cylinder. When the piston begins its upward stroke, the flow is turned so that the above described tumbling action is generated.

However, even when the above described tumbling action is generated, there are limits to the degree to which combustion efficiency can be increased. This is because there is a large amount of intake air flowing into the combustion chamber from the central air intake passage, and that air flows in the opposite direction of the above-described tumble.

To wit, the intake air entering the combustion chamber from the central air intake passage enters the combustion chamber at an angle which is smaller than that of the two side air intake passages, and the flow of air from it is directed more sharply downward in the cylinder than the flows from the two side air intake ports, so that when the flow hits the valve body of the air intake flow, a large component of the air flowing toward the exhaust ports on the opposite side is turned around.

From DE-A-42 33 640 an internal combustion engine comprising three intake valves as mentioned above is already known. Each of the three intake passages associated with the intake valves has on its upper end side a flattened surface having a substantially straight slope for directing the flow of the intake charge downwards towards the centre axis of the cylinder.

Accordingly, it is an objective of the present invention to provide an internal combustion engine with an improved combustion efficiency by creating a stronger tumble inside the cylinder head.

According to the present invention this objective is performed in that the centre intake valve is tilted at an angle with respect to the cylinder axis, said angle being equivalent to or greater than an angle between a first line defined by the ignition point of a spark plug and an end point of the centre intake valve said point being most distant from said ignition point on the bottom surface of said centre intake valve, and a second line perpendicular to the cylinder axis.

Accordingly the airflow through the centre intake passage follows the sloped surface and enters that chamber at an angle with respect to the cylinder axis, resulting in a desired degree of tumble motion and thus improving the combustion efficiency.

Preferred embodiments of the present invention are laid down in the further dependent claims.

In the following the present invention is explained in greater detail by means of preferred embodiments thereof in conjunction with the accompanying drawings, wherein:
Figure 1 is a top view of a cylinder head equipped with the air intake device of an internal combustion engine according to a preferred embodiment of this invention;
Figure 2 shows in a bottom view a cylinder head equipped with the air intake device of the internal combustion engine according to the embodiment of figure 1;
Figure 3 shows the cylinder head according to the embodiment of figure 1 in a view along arrow A of figure 1;
Figure 4 shows the cylinder head according to the embodiment of figure 1 in a view along arrow B of figure 1;
Figure 5 is a cross sectional view of the cylinder head incorporating the air intake and exhaust valves and the valve drive mechanism taken along line V-V of figure 2;
Figure 6 is an enlarged cross section showing the arrangement of principal parts such as the cylinder head, the intake and exhaust valves, a spark plug and a piston;
Figure 7 is a cross section taken along line VII-VII of figure 6;
Figure 8 is a top view of the combustion chamber upper wall with the intake and exhaust valves attached;
Figure 9 is a cross section of a partition wall between two intake passages taken along line IX-IX of figure 2;
Figure 10 is a cross section of the air intake passage area taken along line X-X of figure 2;
Figure 11 shows a cross sectional diagram used to describe the positioning of the air intake valve that opens and closes the central port;
Figure 12 shows in a top view the mounting of the cylinder head;

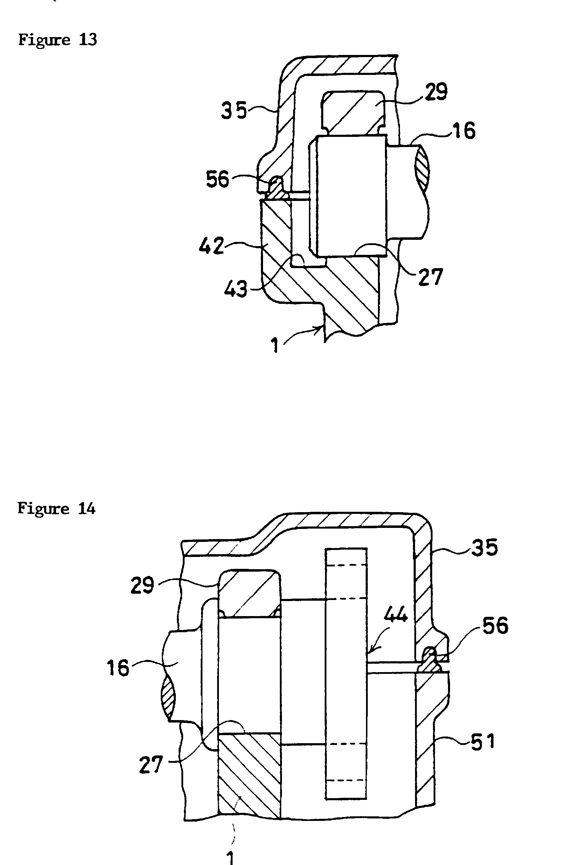

Figure 13 is a cross section along line A-A of figure 12;
Figure 14 is a cross section along line B-B of figure 12;
Figure 15 is a graph showing the operation of a secondary mixing valve with respect to engine rotational speed and engine load;
Figure 16 is a partial bottom view of a cylinder head with an intake passage arrangement according to another embodiment of the invention;

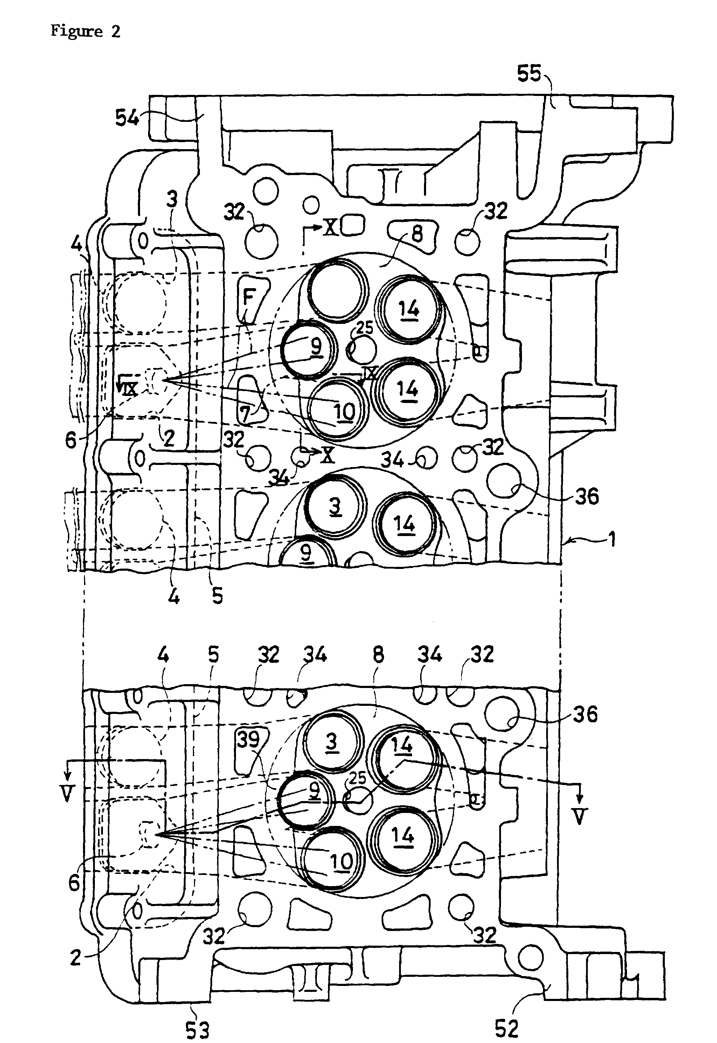

In these figures, 1 is a cylinder head used in a V-8 engine. 2 and 3 represent the primary and secondary air intake ports, which connect to the side of the cylinder head 1 for each of the cylinders These air intake ports 2 and 3 are configured with the air intake passages of this invention. The air intake passages are connected upstream, to the outside air via a surge tank, throttle valve (primary mixing valve), air filter, etc., which are not shown in the figures. The double-dotted line in Figure 2 shows the branching upstream in the cylinder head 1 of the aforementioned primary air intake port 2 and the secondary air intake port 3.

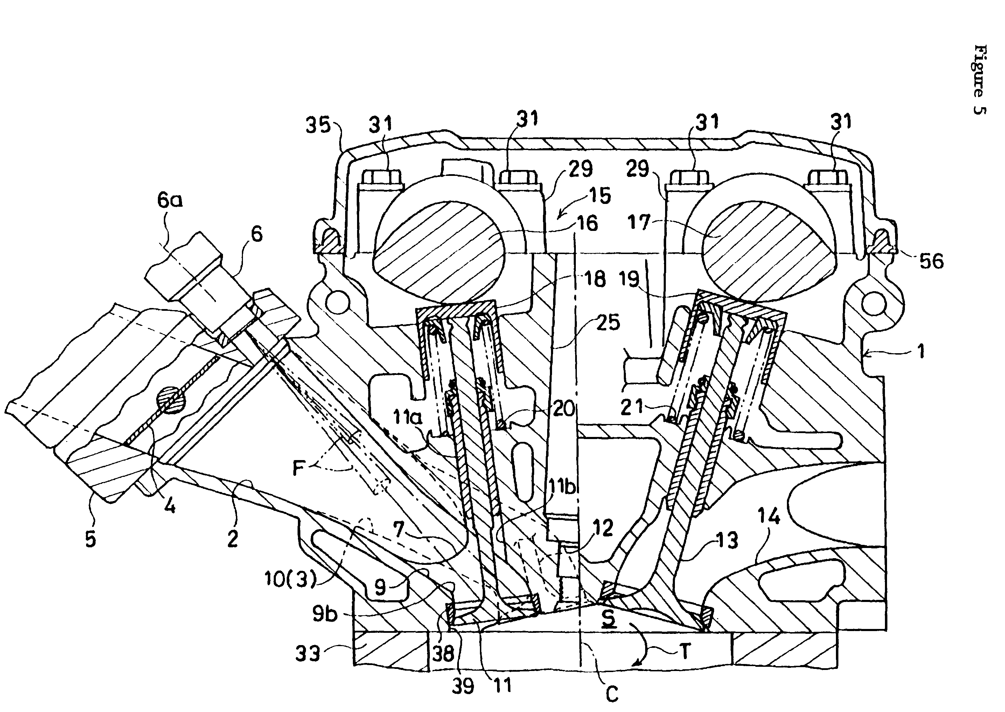

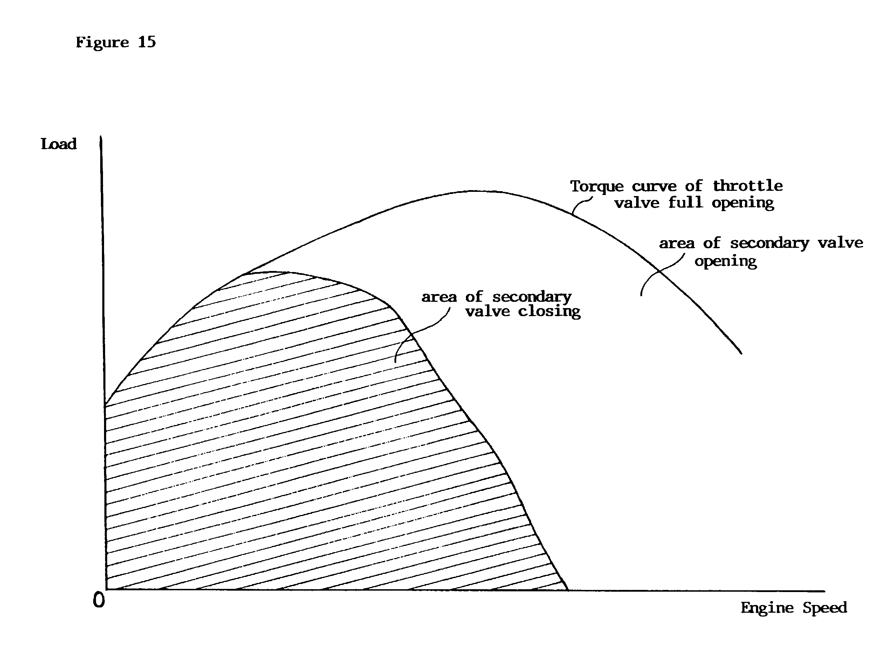

Also, as is shown in Figure 5, there is a secondary mixing valve 4 positioned in the vicinity of the opening on the upstream side of the secondary air intake port 3 in this air intake passage. This secondary mixing valve 4 is attached to the air intake manifold linking material 5 that is fastened to cylinder head 1. A fuel injection device 6 is mounted on this air intake manifold linking material 5 so that fuel can be injected into the primary air intake port 2. In addition, as shown in Figure 15, this secondary mixing valve 4 is of the type which opens and closes depending upon the volume of intake air.

Figure 15 is a graph showing engine load with respect to engine speed. To wit, the secondary mixing valve 4 is closed in the shaded area of the graph of the engine load vs. engine speed rpm. In the other areas it is open.

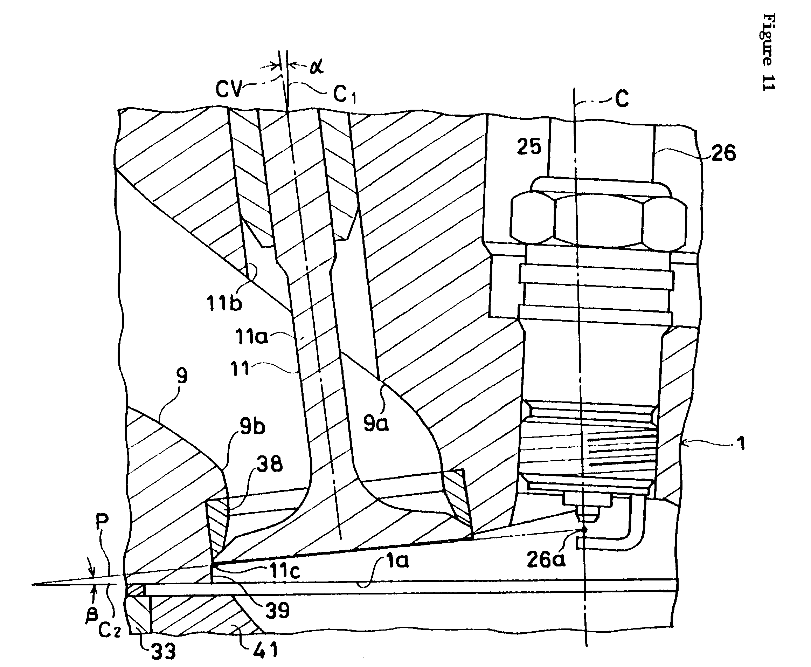

The inside diameter of the aforementioned primary air intake port 2 is greater than that of the secondary air intake port 3. As shown in Figure 2, the partitioning wall 7 inside the cylinder head 1 branches the port into two, and downstream, these open into the upper wall 8 of the combustion chamber at the bottom of the cylinder head 1. In addition, the secondary air intake port 3 has been formed to be adjacent, to the primary air intake port 2, and on the downstream side, the primary air intake port 2 has two adjacent openings. As shown in Figure 10, in the area of the combustion chamber S of the cylinder head 1, there are three air intake ports. As shown in the top view of Figure 2, on the upstream side, the centers of the primary air intake port 2 and the secondary air intake port 3 are on lines that are parallel to the center line of the cylinder.

The primary air intake port 2 forms two of the aforementioned 3 air intake ports, the central port 9 and the side port 10 adjacent to it. As shown in Figure 10, the air intake device of this invention, establishes a smaller inside diameter (or, the cross sectional area measured in a plane intersecting the axial line of the port at a right angle) for the central port 9 than the side port 10. In addition, the side port 10, has approximately the same diameter at a downstream portion thereof as the secondary air intake port 3, and it is formed approximately symmetrically with respect to the central port 9. The central port 9 is configured as the central branch passage while the side port 10 comprises the side branch.

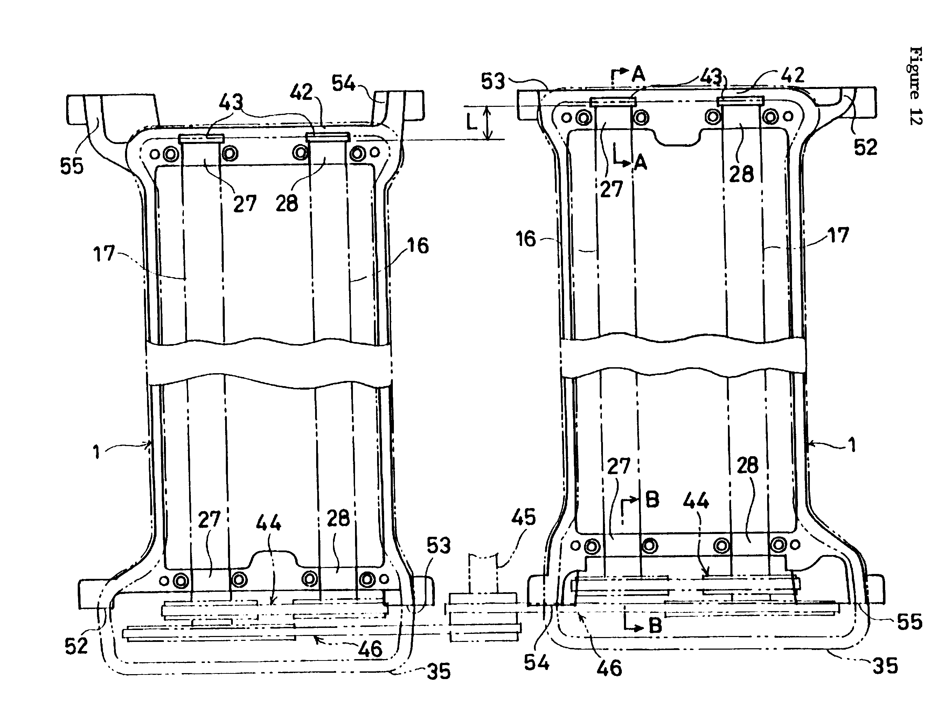

In Figure 5, 11 is the air intake valve that opens and closes the aforementioned central port 9, and 12 is the air intake valve that opens and closes the side port 10. Since the aforementioned central port 9 is of smaller diameter than the side port 10, the aforementioned air intake valve 11 is smaller in diameter than the air intake valve 12 for the side port. While the air intake valve that opens and closes the secondary air intake port 3 is not shown in Figure 5, the same valve as the aforementioned air intake valve 12 may be used. 13 is the exhaust valves, there are two per cylinder, and 14 is the exhaust ports.

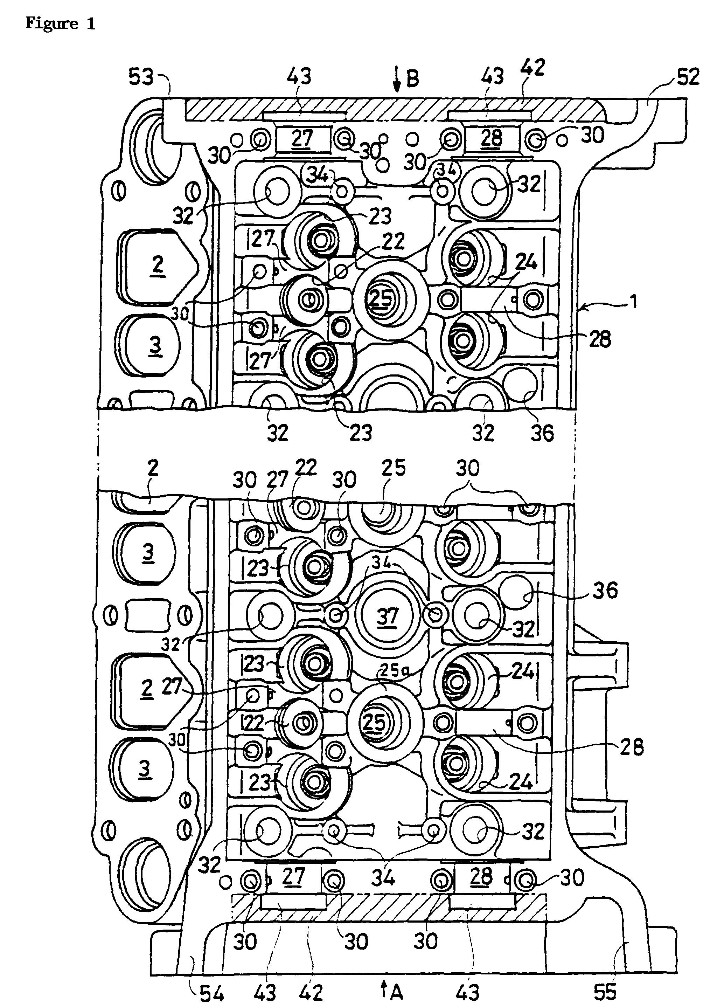

15 is a valve operating device which opens and closes the various intake and exhaust valves with the appropriate timing. This valve operating device 15 is of the conventional type, comprised of an air intake camshaft 16, an exhaust camshaft 17, valve lifters 18 and 19, valve springs 20 and 21, etc. Due to the size relationships of the aforementioned three air intake valves, with the center air intake valve 11 being of smaller diameter than the air intake valves 12 on both sides, the valve lifters 18, the valve springs 20 and other associated parts have been made to a smaller diameter to match. This is the reason for the different diameters for the valve lifter guides 22 and 23 which open into the top of the cylinder head as shown in Figure 1. A valve lifter 18 has been inserted into the valve lifter guide 22 for the central air intake valve 11, while valve lifters 18 have been inserted into valve lifter guides 23 on both sides for the air intake valve 12.

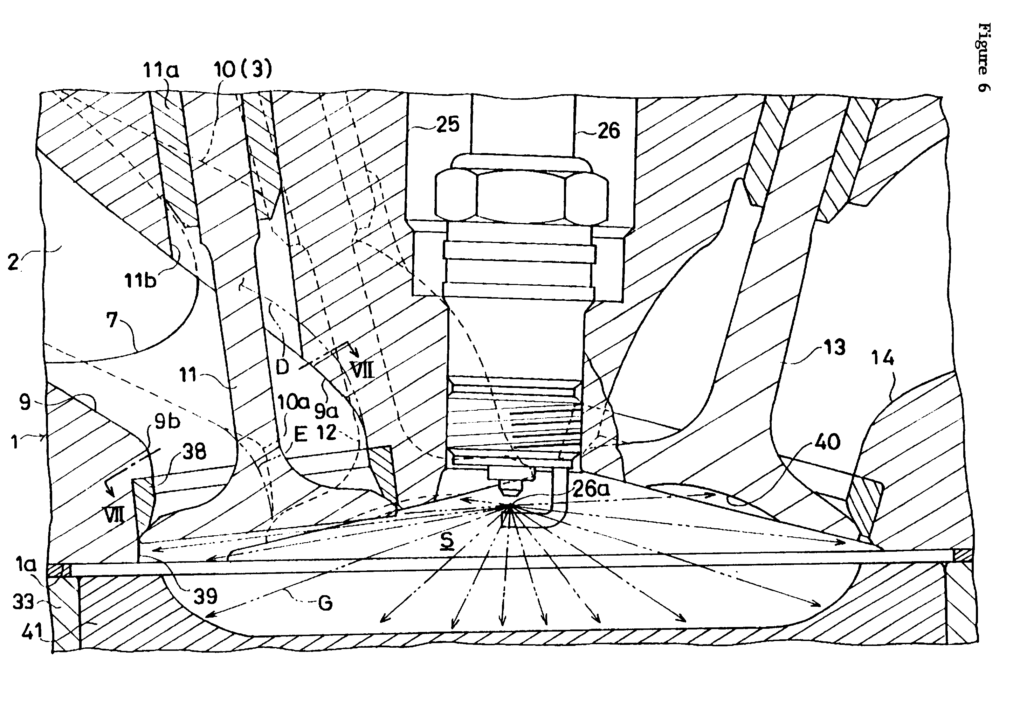

In Figure 1, 24 is the valve lifter guide into which the valve lifter 19 has been inserted for exhaust valve 13. 25 is the plug hole into which the spark plug 26 (Figure 6) is threaded. 27 and 28 are cam journals which hold air intake camshaft 16 and exhaust camshaft 17 and the camshaft holder 29 so that they are free to rotate. 30 represents bolt holes for bolts 31 (Figure 5) which are used to attach the aforementioned camshaft holder 29 to the cylinder head 1. These are positioned between air intake ports 11 and 12, and between exhaust ports 13, 13 for each of the cylinders. Those bolt holes which are in the vicinity of the plug holes 25 have been positioned at equivalent distances from the centers of the plug holes 25. This configuration allows the formation of a relatively broad ring-shaped seal surface 25a around the perimeter of the plug hole openings 25, thereby improving the seal inside and outside the plug holes when the below-described head cover is attached to the cylinder head. 32 represents bolt holes for the bolts (not shown) securing the cylinder head 1 to the cylinder block 33 (Figure 5). 34 represents the holes for the head cover bolts (not shown) that are used to secure the below-described head cover 35 (Figure 12) to the cylinder head 1.36 represents the sand drain holes which are used to expel the sand after casting the cylinder head 1.

Now the structure of the aforementioned primary air intake port 2 and the secondary air intake port 3 will be described in detail.

As is shown in Figure 5, the primary air intake port 2 and the secondary air intake port 3 are established at an angle, when viewed in the camshaft direction, with respect to the cylinder axis C. They are curved toward the cylinder head side from the opening in the combustion chamber in the area near the combustion chamber S. There are valve seats 38 for these air intake valves located in the opening on the combustion chamber side for these ports 2 and 3.

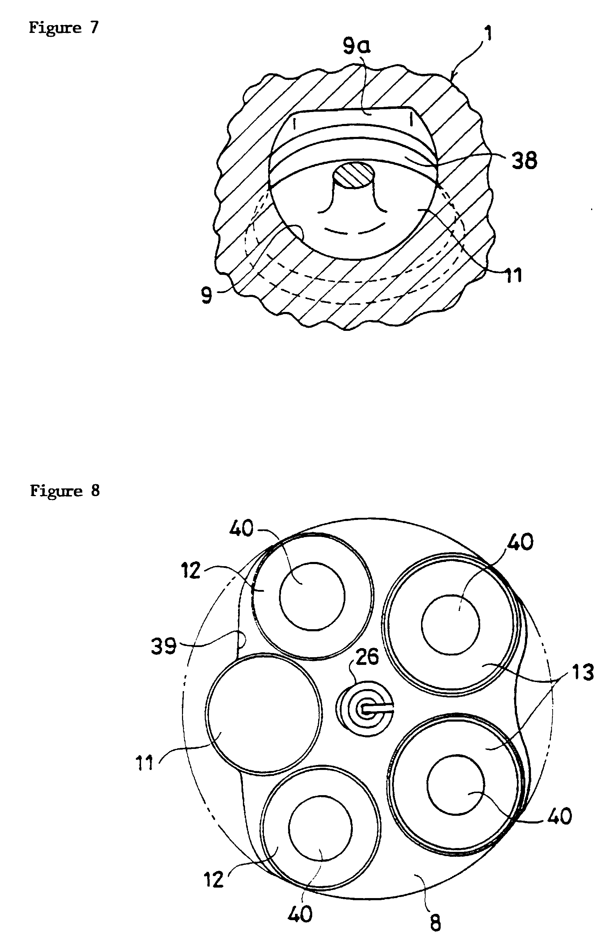

The central port 9 of the primary air intake port 2, has been formed as described above so that its cross sectional area with respect to the axial line of the air intake passage is smaller (smaller in diameter) than that for the side port 10. In addition, on the top of the aforementioned curved area (the cylinder axis side) the inside wall surface has ben formed to a flat shape. This flat surface is a linear sloping surface which gradually directs the intake air flow downward as it approaches the combustion chamber. This straight sloping surface is indicated by reference number 9a in Figures 6 and 7.

Thus, the air flowing through the central air intake port 9, formed by the partitioning wall 7, and which has this sloping surface 9a , enters the combustion chamber S without any great change in the direction of flow; it enters in a downward sloping flow toward the cylinder axial line. While the direction of the air flow is diverted downward in the cylinder by the aforementioned curved area just before the air reaches the combustion chamber, the straight sloping wall inside the passage uses the inertia of the flow along the wall surface to direct it into the combustion chamber. In the prior art, the shape used in this area is shown by the double-dotted line D in Figure 6. The present design, however, allows the air flow to enter at an angle into the combustion chamber S much more easily.

A drill was used to make valve guide hole 11b for the insertion of valve guide 11a for air intake valve 11 in the aforementioned sloped surface 9a of the central port 9. The valve guide hole 11b was formed by drilling from the combustion chamber side at an angle on sloping surface 9a. So doing minimizes any roughness on the sloping surface 9a, thereby minimizing air resistance. The valve guide holes for the side port 10 and the secondary port 3 were formed by drilling into an indentation which was initially established in the upper wall area of the ports when the cylinder head was cast. In other words, these indents were only used for the large ports; they were avoided for the case of the central port 9.

Further, the lower wall surface of the passage for the central port 9 in the aforementioned curved area has an angular area 9b. This angle 9b is formed on the inside wall surface of the passage and it increases the resistance of the air flow for the majority of the air flowing through this area; thus, the angle 9b reduces the flow rate of the intake air.

Thus, the majority of the intake air flowing through this central port 9 into the combustion chamber flows downward, at an angle, from the port in the combustion chamber S toward the axial line of the cylinder.

In addition, there is a masking area 39 formed in the lower surface la of the cylinder head on the side opposite that of the cylinder axis at the opening for the central port 9.

As is shown in Figures 2 and 6, this masking area 39 is shaped so that it encompasses the side area of the valve body of the central air intake valve 11. The openings for the side port 10 and the secondary air intake port 3 extend to the outer circumferential area of the upper wall of the combustion chamber S. By including this masking area 39, when there is a low lift for the air intake valves 11 and 12, the flow of intake air is interrupted at a lower edge of the masking area 39. This assures that the majority of the air intake will flow toward the cylinder axis C.

The side port 10 has been formed at an angle that is greater than that of the aforementioned central port 9 with respect to the cylinder's axis, and the shape of its air intake passage differs from that of the central port 9 in that it has a roughly round cross-section over its entire length. In addition, in this embodiment, an angle 10a has been formed in the lower part of the passage's inner wall just as it was for the center port 9. The secondary air intake port 3 also has an air intake passage which is roughly the same shape as this side port 10, but the angle area has not been formed on the wall surface. It was designed to minimize, insofar as possible, resistance to the intake air flow. The shape of the inner wall surface of the bottom of the curved area of the air intake passage for secondary intake port 3 is shown by the double-dotted line E in Figure 6.

Because of this, the intake air flowing into combustion chamber S from the side port 10 is directed slightly downward by the curved area as it enters the combustion chamber, and its inertia causes it to flow downward at an angle from the top of the combustion chamber toward the cylinder axis. Moreover, the air flow strikes the air intake valve 12 as it enters the combustion chamber, and this changes the flow direction toward the cylinder's axis. This same type of air flow is also produced through the secondary air intake port 3. The air which is flowing along the bottom wall surface of the curved area further has its flow rate reduced by the angle area 10a.

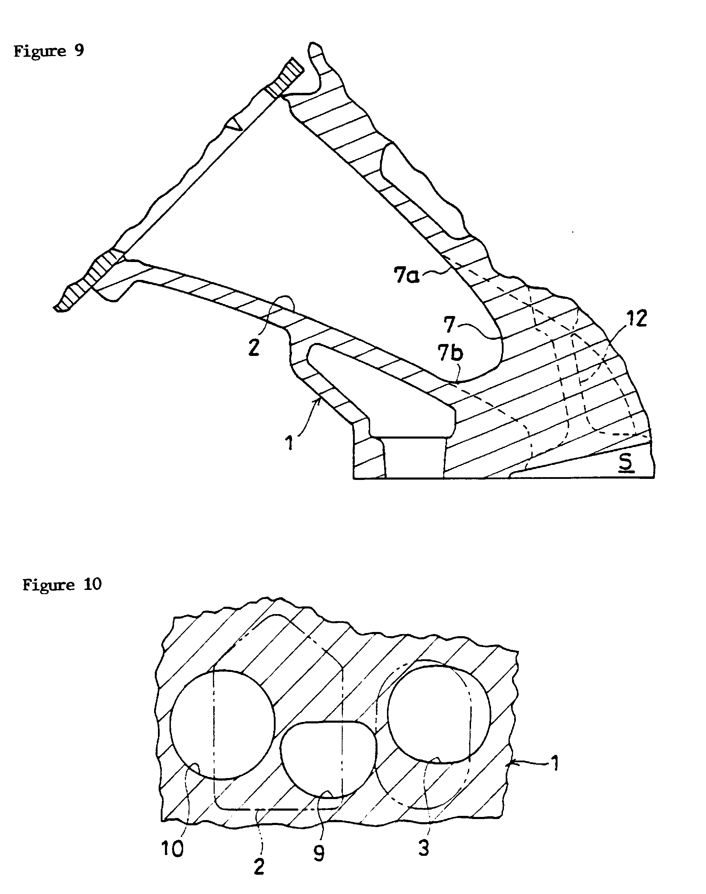

The partitioning wall 7 which lies between the central port 9 and the side port 10, has an upper part 7a, which with respect to the lower part 7b, extends roughly parallel to the axis of the upper side air intake port 10 as is shown in Figure 9. This partition wall 7 causes more air to be distributed to the side port 10, thereby creating a stronger tumbling action in the cylinder. As described above, the primary air intake port 2 has a curve near the combustion chamber, and the air flow near the top of the curve flows at a higher rate of speed than that at the bottom side of the curve.

To wit, the high flow rate intake air is diverted toward the side port 10 so more air flows through this side port 10. The relatively slower air intake flowing along the bottom of the partition wall 7 flows against a relatively low resistance, thus assuring adequate intake air flow.

In addition, the aforementioned fuel injection device supplies fuel to the primary air intake port 2, and as shown in Figure 2, when this primary air intake port 2 is viewed in the axial direction of the cylinder, the fuel injection device 6 is positioned in the center of the upstream area of the primary air intake port 3. As shown in that figure as well as in Figure 5, the fuel is injected in two directions: toward the central port 9 and the side port 10. The fuel injected from said fuel injector device 6, is indicated by the double dotted lines F in Figures 2 and 5; the device is set to inject the fuel in the direction of the centers of air intake valves 11 and 12. When the central port 9 and the side port 10 are viewed from the top, they do not extend in a parallel manner, so the fuel injection device is mounted in the air intake manifold linking material 5 so that it is slightly rotated with respect to axial line 6a so that the fuel can be injected approximately toward the respective ports.

In addition, air intake valve 11 which opens and closes the central port 9 of the primary air intake port 2, has a totally flat bottom surface as shown in Figures 6 and 8. The other air intake valves 12 and exhaust valves 13 employ the conventional light weight valves, so their bottom surface has a cup-shaped recess 40 in the center. Also, this air intake valve 11 it tilted by angle a with respect to axis line C₁, as shown in Figure 11. In Figure 11, C₁ is an imaginary line running parallel to the cylinder axis line. Accordingly, the aforementioned angle α is set to be equivalent to, or slightly larger than angle β, which is that angle formed by the imaginary line P which passes through the ignition point 26a for the spark plug 26 and the end point 11c which is most distant from the ignition point 26a on the bottom surface of the air intake valve 11; and imaginary line C₂ which is perpendicular to the cylinder axis C and which extends toward the aforementioned end point 11c (eg. C₂ is parallel to the bottom surface of the cylinder head). In this example, angles α and β are set to be approximately equivalent. Because of this, air intake valve 11 is positioned above the ignition point 26a, as shown in Figure 6, from the imaginary extension of the bottom surface of the valve. The double-dotted line G which radiates from the ignition point 26a in Figure 6 represents the propagation of the flame from the spark plug 26. Reference number 41 in Figure 6 indicates the piston.

The configuration of this central air intake valve 11 assures that there is little unburned fuel after the ignition process, and it enables the attainment of higher levels of fuel efficiency. The reason for this is as follows. Among the three air intake valves, this central air intake valve 11 is tilted at a smaller angle with respect to the cylinder axis C than the side air intake valves 12, 12, and its bottom is also flatter than that of the side air intake valves 12, 12. Because of this configuration, when viewed from the ignition point toward air intake valve 11, there can be a shadow area that develops on the underside of the valve 11, where the air/fuel mixture that is in this shadow area would be resistant to combustion propagation. In the present embodiment, however, not only has the recess been eliminated in the bottom of the central air intake valve 11, but as described above, angle α has been set to be roughly equivalent to angle β, and the bottom surface is higher than the ignition point 26a, so this eliminates the above described shadow area, thereby allowing assured combustion propagation throughout the entire area. Lighter weight can be achieved by making angle a larger than angle β and if this is done, the recess may be included in the central air intake valve 11.

The structure described above can be applied to both cylinder heads 1 in a V-8 style engine for each back of pistons. Figure 12 shows such a cylinder head 1 mounted on the cylinder block 33. The air intake and exhaust valve attachments have been omitted from Figure 12. At this point, the structure of the cylinder head 1 will be described.

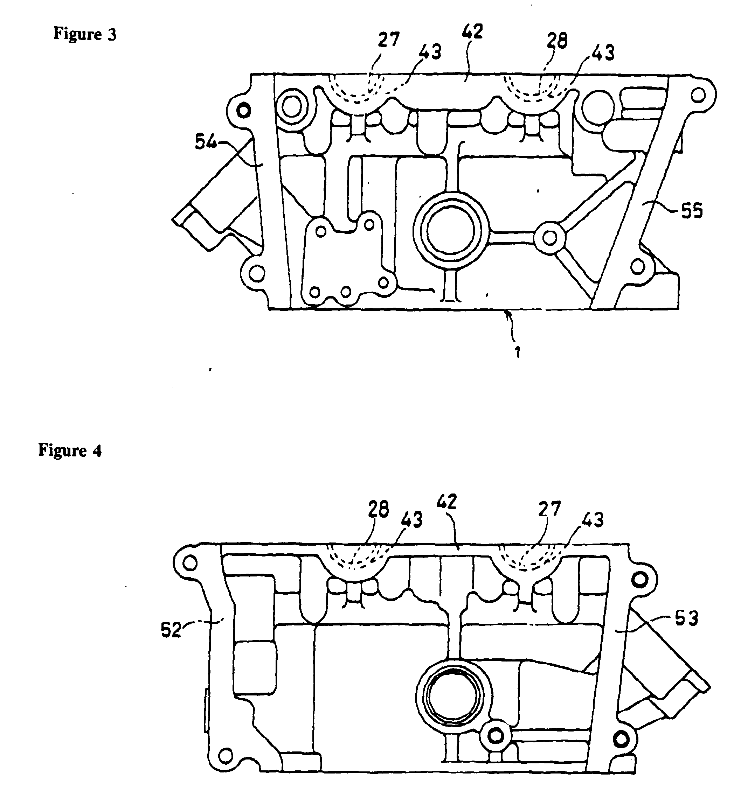

As is shown in Figures 1, 3 and 4, there is a seal wall 42 formed on each end of the cylinder head 1, with respect to the axial direction of the camshaft, said seal wall 42 covers in part the cam journals 27 and 28 holding the ends of intake and exhaust camshafts 17 and 17. The top surface of this seal wall 42 is formed to be level with other parts of the cylinder head. It is formed to extend clear across the width of the cylinder head 1 (the left-right direction in Figure 1) without a break. There are notched areas 43 formed in the seal wall 42 for the aforementioned cam journals 27, 28.

To assemble a V-8 engine using this cylinder head 1, first two cylinder heads would be prepared. Then, the top side of the seal wall 42 on one of the cylinder heads 1, as shown in Figure 1, would be milled away, and the bottom seal wall 42 (in Figure 1) of the other cylinder head would also be milled away. These cut away areas of the seal wall 42 expose cam journals 27 and 28.

One of the cylinder heads with the seal wall area 42 milled away as described above is then rotated 180 degrees in the axial direction with respect to the other so that not only are the corresponding primary air intake port 2 and the secondary air intake port openings opposite each other, but the area where the seal wall 42 was cut away is positioned toward the front after mounting on the cylinder block 33. What is meant by the "front side" of the engine is the side where the cam drive mechanism is attached. To wit, as shown in Figure 12, the milled away area allows the intake and exhaust camshafts 16 and 17 to protrude beyond the cylinder head. These ends of the intake and exhaust cams 16 and 17 are then incorporated into the camshaft drive mechanism.

Separate camshaft drive mechanisms are used for each cylinder bank on V-8 engines; as shown in Figure 12, there is a first belt drive means 44 for the intake and exhaust camshafts 16 and 17 which is powered by the crankshaft 45 of the engine, by means a second belt drive means 46. The first drive means is attached so that it is shiftable left and right with respect to the crankshaft 45. In this embodiment with a V-8 engine, the conventional offset L for the cylinder heads is shown as dimension L in Figure 12.

Next, a front cover 51 is attached to the front end of the cylinder block and cylinder heads at the front side of the engine. Further, head cover 35 is attached atop the cylinder head 1 and the aforementioned front cover 51 so that its seal surface rests on the top seal surface of the cylinder head. There are also projecting walls 52-55 on the front and back of the cylinder head 1 in the axial direction of the crankshaft (at the front and back of the engine) to which the front cover is affixed via a sealing material (not shown).

The aforementioned projecting walls 52-55 are formed to a length to accommodate the above described offset length L, so that when one of the cylinder heads is shifted rearward with respect to the other when mounting, the projecting end surface of the walls (at the front and rear ends of the engine respectively) will lie in the same respective planes. In other words, the dimensions of the engine front side projecting walls 54, 55 of the one cylinder head 1 that has been shifted rearward (the cylinder head 1 on the right side in Figure 12) are longer than those of the projecting walls 52, 53 on the other cylinder head. This arrangements eliminates any differences between the cylinder banks where the front cover is attached; all of the seal surfaces lie within the same plane.

As shown in Figures in 13 and 14, the head cover is affixed atop the seal surfaces on the top of cylinder head 1 and on the top of the aforementioned front cover 51 via a seal material 56 sandwiched between them. The double dotted line which lies inside the outer perimeter line for the head cover 35 in Figure 12 shows the inner boundary of the seal surface formed on the bottom of head cover 35. By attaching the head cover 35 in this manner, it is possible to enclose the valve operation mechanisms 15 and the camshaft drive mechanisms.

Next the operation of the above described engine air intake device will be explained. When the engine rpm is in the low range and there is minimal air intake, the secondary mixing valve 4 is closed, so the air intake into the combustion chamber is via the primary air intake port 2 alone. Air flowing through this primary air intake port is divided to the middle port 9 and the side port 10 sides by the partition wall 7. The fuel injection device 6 injects fuel and it is mixed in these ports into an air/fuel mixture. At this time, the central air intake port 9 is smaller than the side air intake port 10, so more intake air is flowing through the side port 10 than the central port 9.

Since the angle of the side port 10 with respect to the axial line of the cylinder C is tilted to an angle greater than that of central port 9, the air/fuel mixture from side port 10 flows downward from the top of the combustion chamber S toward the cylinder axis at a relatively sharp angle. The air/fuel mixture entering the combustion chamber from central port 9, due to the action of sloping surface 9a, angle 9b and masking area 39, also flows downward from the top of the combustion chamber S toward the cylinder axis in a similar manner. To wit, a tumble shown by the arrow T in Figure 5 is generated within the cylinder.

At this time, because there is a relatively higher air flow through the side port 10 than the central port 9, as shown in Figure 2, an air flow which rotates to the left around the cylinder axis is generated as well. This air flow will be called "swirl."

Thus, when tumbling and swirling flows have been created within the cylinder, the air fuel mixture is evenly distributed, providing efficient flame propagation throughout the cylinder upon ignition. During ignition, the flame propagates in the manner shown by the double-dotted line G in Figure 6 within the combustion chamber S. The material used for the walls of the combustion chamber S is one which can be exposed to the ignition point 26a of the spark plug 26, so the flame propagation directly reaches the inner wall. In general, air intake devices equipped with three intake valves employ a central intake valve which has a nearly horizontal valve body, and its bottom surface is not well exposed to the ignition point 26. If there is a recess formed in the valve body, unburned gases are likely to remain in the recess area. However, in the present embodiment, the central air intake valve, which is nearly horizontal, does not have a recess in the valve body, so no unburned gas can remain. Moreover, according to the invention, this air intake valve 11 is tilted at angle α with respect to the cylinder axis C, which is equivalent to or greater than the angle β formed between imaginary line P running from the ignition point and the end point 11c of the air intake valve, said end point being most distant from the ignition point on the bottom surface of intake valve 11 and imaginary line C₂ which extends perpendicular to the cylinder axis, so that the extension of the bottom surface of the intake valve is higher than the ignition point, thereby preventing residuals of unburned gases.

When the engine is operating in the high rpm range, the secondary mixing valve 4 is open to provide air intake through the secondary air intake port 3 as well. This secondary air intake port 3 is of roughly the same shape as the above mentioned side air intake port 10, so that when intake air is pulled into the cylinder from the secondary air intake port 3, the aforementioned tumble T becomes stronger.

Accordingly, in the above described air intake device, the intake air from the center port 9 is restrained from flowing to the opposite side of the cylinder axis, thereby generating a strong tumbling action in a right-hand tumble in Figure 5, so that the fuel is distributed evenly throughout the cylinder, assuring flame propagation throughout the entire area.

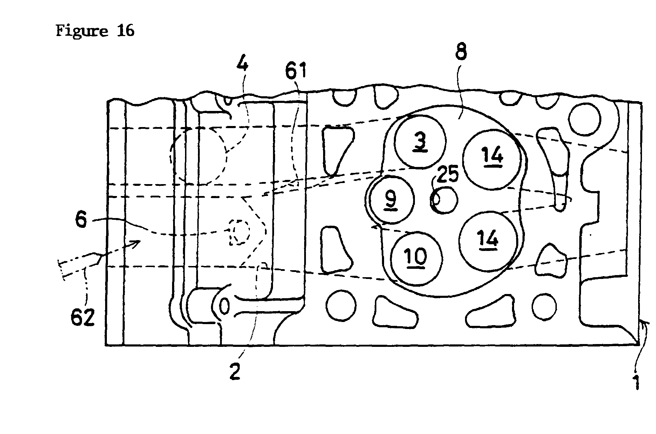

In the above-described embodiment, a primary air intake port 2 and secondary air intake port 3 were formed in the cylinder head, and the primary air intake port 2 was branched into a central port 9 and a side port 10, but the overall structure of the air intake passages may be modified from the above design as appropriate. To wit, the individual air intake ports could also be formed separately in the cylinder head, and they would be linked on the upstream side of the cylinder head. Also, as shown in Figure 16, it would be possible to have a linking passage to link the primary air intake port 2 with the secondary air intake port 3.

Figure 16 shows an example of another air intake passage embodiment. In the figure, the parts that are equivalent to those described in Figure 2 above have been labeled with the same reference numbers, and explanation of those common parts will be omitted. In Figure 16, 61 is a linking passage which links the primary air intake port 2 with the secondary air intake port 3. This linking passage is formed downstream of the fuel injection device 6 for both ports 2 and 3. This linking passage was made by a drill 62, which appears in that same figure. In forming the linking passage 61, the drill 62 is inserted at the upstream side opening of air intake port 2 and pushed toward the inside.

By using this linking passage 61 to link the primary air intake port 2 with the secondary air intake port 3, when the secondary valve 4 is closed, negative pressure can cause air intake through the secondary port 3 via the linking passage 61. Thus, fuel and air can enter through secondary air intake port 3 even when the secondary valve 4 is closed, and this arrangement enables the cooling of the air intake valve 12 used by the secondary air intake port 3.

As described above, the engine air intake device uses a reduced cross section for the central air intake port, and employs a sloping area in the vicininty of its entry into the combustion chamber which has a flat shape so that the airstream of intake air flows in a linear downward slope in the vicinity of the combustion chamber. Since the cross section of this central air intake passage is smaller than the others, the air inflow is comparatively smaller. The angled surface in the curved area allows the flow to remain largely undisturbed as it enters the combustion chamber on a downward slant. To wit, the amount of air flowing from the central air intake passage has been diminished and its entry angle into the combustion chamber has been made approximately equivalent to the angle of flow from the other ports.

This enables the creation of a strong tumbling action inside the cylinder, to distribute the fuel evenly throughout and assure ignition flame propagation over the entire volume of the cylinder. This improves the combustion efficiency.

The engine air intake device according to a preferred embodiment additionally provides an air flow restricting angle on the inside wall of the air intake passage of the central air intake passage, downstream of the curved area, and in addition, it establishes a masking area for the opening of this central air intake port into the top of the combustion chamber on the side of the opening which is on the opposite side from the cylinder axial line. Thus, intake air flowing downstream from the curved area of the passage encounters a high resistance that slows its rate of flow. When the amount of lift of the intake valve is low, then, the masking area cuts the flow of air to the opposite side of the cylinder bore line.

Accordingly, when the amount of lift on the intake valve is low, the air entering the combustion chamber from the central air intake passage is primarily directed toward the axial line of the cylinder to further strengthen the tumbling action therein.

The engine air intake device preferably provides a partition wall to branch one of the side air intake passages into a side and central air intake passage, in a manner such that there is a relatively faster flow of intake air at the top of the air intake passage, than at the bottom. This further strengthens the tumbling action.

## Claims

1. Internal combustion engine comprising at least one cylinder with a combustion chamber (S) defined therein, at least three intake valves (11,12) including at least one centre intake valve (11) and two side intake valves (12) and intake passages (3,9,10) associated therewith for delivering an intake charge to said combustion chamber (S), wherein the intake passage (9) associated with the centre intake valve (11) has on its upper end side a flattened surface (9a) having a substantially straight slope for directing the flow of the intake charge downwards towards the centre axis of the cylinder **characterised in that** the centre intake valve (11) is tilted at an angle (α) with respect to the cylinder axis (C), said angle (α) being equivalent to or greater than an angle (β) between a first line (P) defined by the ignition point (26a) of a spark plug (26) and an end point (11c) of the centre intake valve (11) said point (11c) being most distant from said ignition point (26a) on the bottom surface of said centre intake valve (11), and a second line (C₂) perpendicular to the cylinder axis (C).

2. Internal combustion engine as claimed in claim 1, **characterised in that** a first side intake passage (10) is associated with a first one of said side intake valves (12) and a second side intake passage (3) is associated with a second one of said side intake valves (12).

3. Internal combustion engine as claimed in claims 1 or 2 **characterised in that** the centre intake passage (9) associated with the centre intake valve (11) has in its port portion a smaller cross sectional area than the other intake passages (3,10).

4. Internal combustion engine as claimed in at least one of claims 1 to 3, **characterised in that** the centre intake passage (9) is provided with an angular surface (9b) on its lower inside diametrically opposed to said flattened surface (9a).

5. Internal combustion engine as claimed in at least one of claims 1 to 4, **characterised in that** a masking protrusion (39) is provided on an inner surface of the cylinder defining the combustion chamber (S), said masking protrusion (39) partially surrounding the opening of the centre intake passage (9) into the combustion chamber (S) on the side thereof opposite to the cylinder axis.

6. Internal combustion engine as claimed in at least one of claims 1 to 5, **characterised in that** the centre intake passage (9) and at least the first side intake passage (10) are branched from a single primary intake passage (2) on the upstream side, wherein an upper portion (7a) of a partitioning wall (7) between the centre intake passage (9) and the first side intake passage (10) extends substantially parallel to the axis of the side intake passage (10).

7. Internal combustion engine as claimed in at least one of claims 2 to 6, **characterised in that** a secondary mixing valve (4) is disposed in the second side intake passage (3).

8. Internal combustion engine as claimed in at least one of claims 1 to 7, **characterised in that** the first side intake passage (10) extends from its opening into the combustion chamber (S) towards a cylinder side at an angle greater than that of the centre intake passage (9) with respect to the cylinder axis (C).

9. Internal combustion engine as claimed in at least one of claims 2 to 8, **characterised in that** the first side intake passage (10) and the second side intake passage (3) are disposed in a common plane.

10. Internal combustion engine as claimed in at least one of claims 6 to 9, with claims 7 to 9 dependent from claim 6, **characterised in that** a fuel injection device (6) is provided for injecting fuel into the primary intake passage (2) upstream from the partitioning wall (7).

11. Internal combustion engine as claimed in claim 10, **characterised in that** a linking passage (61) for linking the primary intake passage (2) and the second side intake passage (3) is formed downstream of the fuel injection device (6) and the secondary mixing valve (4).

12. Internal combustion engine as claimed in at least one of claims 6 to 11, **characterised in that** a linking passage (61) for linking the primary intake passage (2) and the second side intake passage (3) is formed downstream of the fuel injection device (6) and the secondary mixing valve (4).

## Patentansprüche

1. Brennkraftmaschine umfasssend zumindest einen Zylinder mit einer darin festgelegten Brennkammer (S), zumindest drei Einlaßventile (11, 12) einschließlich von zumindest einem zentralen Einlaßventil (11) sowie zwei Seiteneinlaßventile (12) und zu diesen zugeordnete Einlaßkanäle (3, 9, 10), um eine Einlaßbeschickung dieser Brennkammer (S) zuzuführen, wobei der dem zentralen Einlaßventil (11) zugeordnete Einlaßkanal (9) an seiner oberen Endseite eine abgeflachte Oberfläche (9a) aufweist mit einer im wesentlichen gradlinig verlaufenden Abschrägung, um den Fluß der Einlaßbeschickung nach unten in Richtung der zentralen Achse des Zylinders zu leiten, **dadurch gekennzeichnet,** daß das zentrale Einlaßventil (11) bezüglich zu der Zylinderachse (C) um einen Winkel (α) gekippt ist, dieser Winkel (α) gleich oder größer ist als ein Winkel (β) zwischen einer ersten Linie (P), die von dem Zündpunkt (26a) einer Zündkerze (26) sowie von einem Endpunkt (11c) des zentralen Einlaßventiles (11) festgelegt ist, wobei dieser Punkt (11c) am weitesten von dem Zündpunkt (26a) auf der unteren Oberfläche des zentralen Einlaßventils (11) entfernt ist, und einer zweiten Linie (C₂), die senkrecht zu der Zylinderachse (C) verläuft.

2. Brennkraftmaschine nach Anspruch 1, **dadurch gekennzeichnet,** daß ein erster Seiteneinlaßkanal (10) einem ersten dieser Seiteneinlaßventile (12) zugeordnet ist und daß ein zweiter Seiteneinlaßkanal (3) einem zweiten dieser Seiteneinlaßventile (12) zugeordnet ist.

3. Brennkraftmaschine nach Anspruch 1 oder 2, **dadurch gekennzeichnet,** daß der zentrale Einlaßkanal (9), der dem zentralen Einlaßventil (11) zugeordnet ist, in seinem Öffnungsabschnitt einen geringeren Querschnitt aufweist als die anderen Einlaßkanäle (3, 10).

4. Brennkraftmaschine nach mindestens einem der Ansprüche 1 bis 3, **dadurch gekennzeichnet,** daß der zentrale Einlaßkanal (9) an seiner unteren Innenseite, der gradlinig verlaufenden Oberfläche (9a) diametral gegenüberliegend mit einer winkeligen Oberfläche (9b) versehen ist.

5. Brennkraftmaschine nach mindestens einem der Ansprüche 1 bis 4, **dadurch gekennzeichnet,** daß ein abdeckender Vorsprung (39) an einer inneren Oberfläche des Zylinders, der die Brennkammer (S) festlegt, angeordnet ist, wobei dieser abdeckende Vorsprung (39) die Öffnung des zentralen Einlaßkanals (9) in die Brennkammer (S) auf deren der Zylinderachse gegenüberliegenden Seite teilweise umgibt.

6. Brennkraftmaschine nach zumindest einem der Ansprüche 1 bis 5, **dadurch gekennzeichnet**, daß der zentrale Einlaßkanal (9) und zumindest der erste Seiteneinlaßkanal (10) von einem einzigen primären Einlaßkanal (2) auf der stromaufwärtigen Seite abzweigen, wobei ein oberer Abschnitt (7a) einer Trennwand (7) zwischen dem zentralen Einlaßkanal (9) und dem ersten Seiteneinlaßkanal (10) sich im wesentlichen parallel zu der Achse des Seiteneinlaßkanals (10) erstreckt.

7. Brennkraftmaschine nach mindestens einem der Ansprüche 2 bis 6, **dadurch gekennzeichnet,** daß ein sekundäres Mischventil (4) in dem zweiten Seiteneinlaßkanal (3) angeordnet ist.

8. Brennkraftmaschine nach mindestens einem der Ansprüche 1 bis 7, **dadurch gekennzeichnet,** daß der erste Seiteneinlaßkanal (10) sich von seiner Öffnung in die Brennkammem (S) in Richtung einer Zylinderseite mit einem Winkel erstreckt, der größer ist als derjenige zwischen dem zentralen Einlaßkanal (9) und der Zylinderachse (C).

9. Brennkraftmaschine nach mindestens einem der Ansprüche 2 bis 8, **dadurch gekennzeichnet,** daß der erste Seiteneinlaßkanal (10) und der zweite Seiteneinlaßkanal (3) in einer gemeinsamen Ebene angeordnet sind.

10. Brennkraftmaschine nach zumindest einem der Ansprüche 6 bis 9, wobei die Ansprüche 7 bis 9 von dem Anspruch 6 abhängig sind, **dadurch gekennzeichnet,** daß eine Kraftstoffeinspritzvorrichtung (6) vorgesehen ist zum Einspritzen von Kraftstoff in den primären Einlaßkanal (2) stromaufwärts der Trennwand (7).

11. Brennkraftmaschine nach Anspruch 10, **dadurch gekennzeichnet,** daß ein Verbindungskanal (61) zum Verbinden des primären Einlaßkanales (2) mit dem zweiten Seiteneinlaßkanal (3) stromabwärts der Kraftstoffeinspritzvorrichtung (6) und des sekundären Mischventils (4) ausgebildet ist.

12. Brennkraftmaschne nach mindestens einem der Ansprüche 6 bis 11, **dadurch gekennzeichnet,** daß ein Verbindungskanal (61) zum Verbinden des primären Einlaßkanales (2) mit dem zweiten Seiteneinlaßkanal (3) stromabwärts der Kraftstoffeinspritzvorrichtung (6) und des sekundären Mischventils (4) ausgebildet ist.

## Revendications

1. Moteur à combustion interne comprenant au moins un cylindre comportant une chambre de combustion (S) définie dans celui-ci, au moins trois soupapes d'admission (11, 12) comprenant au moins une soupape centrale d'admission (11) et deux soupapes latérales d'admission (12) et des passages d'admission (3, 9, 10) associés à celles-ci afin de délivrer une dose de gaz d'admission dans ladite chambre de combustion (S), dans lequel le passage d'admission (9) associé à la soupape centrale d'admission (11) a du côté de son extrémité supérieure une surface aplatie (9a) comportant une pente essentiellement droite, afin de diriger le flux de la dose de gaz d'admission vers le bas et vers l'axe central du cylindre,
caractérisé en ce que,
la soupape centrale d'admission (11) est inclinée selon un angle (α) par rapport à l'axe de cylindre (C), ledit angle (α) étant égal ou supérieur à un angle (β) entre une première ligne (P) définie par le point d'allumage (26a) d'une bougie d'allumage (26) et un point d'extrémité (11c) de la soupape centrale d'admission (11), ledit point (11c) étant le plus éloigné du dit point d'allumage (26a) sur la surface d'embase de ladite soupape centrale d'admission (11), et une seconde ligne (C₂) perpendiculaire à l'axe de cylindre (C).

2. Moteur à combustion interne selon la revendication 1, caractérisé en ce qu'un premier passage latéral d'admission (10) est associé à une première des dites soupapes latérales d'admission (12) et qu'un second passage latéral d'admission (3) est associé à une seconde des dites soupapes latérales d'admission (12).

3. Moteur à combustion interne selon les revendications 1 ou 2, caractérisé en ce que le passage central d'admission (9) associé à la soupape centrale d'admission (11) a dans sa partie d'orifice une section transversale inférieure à celle des autres passages d'admission (3, 10).

4. Moteur à combustion interne selon au moins l'une quelconque des revendications 1 à 3, caractérisé en ce que le passage central d'admission (9) comporte une surface angulaire (9b) sur sa partie inférieure intérieure diamétralement opposée à ladite surface aplatie (9a).

5. Moteur à combustion interne selon au moins l'une quelconque des revendications 1 à 4, caractérisé en ce qu'une saillie d'obturation (39) est aménagée sur une surface intérieure du cylindre définissant la chambre de combustion (S), ladite saillie d'obturation (39) entourant en partie l'ouverture du passage central d'admission (9) à l'intérieur de la chambre de combustion (S) sur le côté de celle-ci opposé à l'axe de cylindre.

6. Moteur à combustion interne selon au moins l'une quelconque des revendications 1 à 5, caractérisé en ce que le passage central d'admission (9) et au moins le premier passage latéral d'admission (10) sont en dérivation à partir d'un passage d'admission primaire unique (2) du côté amont, dans lequel une partie supérieure (7a) d'une paroi de séparation (7) entre le passage central d'admission (9) et le premier passage latéral d'admission (10) s'étend essentiellement de manière parallèle à l'axe du passage latéral d'admission (10).

7. Moteur à combustion interne selon au moins l'une quelconque des revendications 2 à 6, caractérisé en ce qu'un clapet de mélange secondaire (4) est disposé dans le second passage latéral d'admission (3).

8. Moteur à combustion interne selon au moins l'une quelconque des revendications 1 à 7, caractérisé en ce que le premier passage latéral d'admission (10) s'étend à partir de son ouverture dans la chambre de combustion (S) vers un côté du cylindre selon un angle supérieur à celui du passage central d'admission (9) par rapport à l'axe de cylindre (C).

9. Moteur à combustion interne selon au moins l'une quelconque des revendications 2 à 8, caractérisé en ce que le premier passage latéral d'admission (10) et le second passage latéral d'admission (3) sont disposés sur un plan commun.

10. Moteur à combustion interne selon au moins l'une quelconque des revendications 6 à 9, les revendications 7 à 9 étant dépendantes de la revendication 6, caractérisé en ce qu'un dispositif d'injection de carburant (6) est fourni afin de d'injecter du carburant dans le passage primaire d'admission (2) en amont de la paroi de séparation (7).

11. Moteur à combustion interne selon la revendication 10, caractérisé en ce qu'un passage de liaison (61) destiné à relier le passage d'admission primaire (2) et le second passage latéral d'admission (3) est formé en aval du dispositif d'injection de carburant (6) et du clapet de mélange secondaire (4).

12. Moteur à combustion interne selon au moins l'une quelconque des revendications 6 à 11, caractérisé en ce qu'un passage de liaison (61) destiné à relier le passage d'admission primaire (2) et le second passage latéral d'admission (3) est formé en aval du dispositif d'injection de carburant (6) et du clapet de mélange secondaire (4).
